# EUROPÄISCHE PATENTSCHRIFT

(11) **EP 1 349 428 B1**
(45) Veröffentlichungstag und Bekanntmachung des Hinweises auf die Patenterteilung: **28.09.2016**
(21) Anmeldenummer: 03006555.1
(22) Anmeldetag: 24.03.2003
(51) Int. Cl.: B60H 1/22, F24H 3/04, F24H 9/18, F24H 9/20, H05B 1/02

(54) **Heizkörper und Verfahren zur Steuerung eines Heizkörpers, insbesondere für ein Kraftfahrzeug**
Heating element and process for controlling a heating element, particularly used in a car
Corps de chauffe en procédé de commande d'un corps de chauffe en particulier destiné à une voiture

(30) Priorität: 26.03.2002 DE 10213407
(43) Veröffentlichungstag der Anmeldung: 01.10.2003
(73) Patentinhaber: MAHLE Behr GmbH & Co. KG, 70469 Stuttgart (DE)
(72) Erfinder: Kohl, Michael, 74321 Bietigheim-Bissingen (DE); Molt, Kurt, Dr., 74321 Bietigheim-Bissingen (DE); Traub, Matthias, 70825 Komtal-Münchingen (DE)
(74) Vertreter: Grauel, Andreas

(56) Entgegenhaltungen:
- DE-A1- 3 447 182
- DE-A1- 3 639 172
- DE-A1- 4 345 056
- DE-A1- 19 835 622
- US-A- 5 788 148

## Beschreibung

Die Erfindung betrifft einen Heizkörper, welcher insbesondere für die Verwendung in einem Kraftfahrzeug geeignet ist. Obwohl die Erfindung im Folgenden mit Hinblick auf den Einsatz an einem Kraftfahrzeug beschrieben wird, sei darauf hingewiesen, dass der erfindungsgemäße Heizkörper auch für Heizprozesse an anderen Vorrichtungen eingesetzt werden kann.

Heizkörper mit elektrischen Zusatzheizungen finden heute verbreitet Anwendung, beispielsweise in Kraftfahrzeugen mit und ohne Klimatisierungssystemen und dergleichen mehr. Im Falle eines Kraftfahrzeugs dient ein solcher Heizkörper zum Beispiel zur Beheizung des Fahrzeuginnenraums.

Üblicherweise erfolgt eine Beheizung des Fahrzeuginnenraums im wesentlichen über die Abwärme des Verbrennungsmotors, die an das Kühlwasser des Kühlsystems abgegeben wird. Von dort wird die Abwärme über einen Wärmetauscher an die in den Fahrzeuginnenraum strömende Luft abgegeben. Die volle Motorabwärme steht jedoch erst nach einer bestimmten Betriebsdauer zur Verfügung, so dass insbesondere in der kalten Jahreszeit die Heizung für den Fahrzeuginnenraum als unzureichend empfunden werden kann.

Das Problem wird zusätzlich noch dadurch vergrößert, dass mit der Entwicklung von sparsameren Motoren weniger Abwärme anfällt, die zur Aufheizung des Fahrzeuginnenraums zur Verfügung steht, so dass bei entsprechenden Umweltbedingungen die Abwärme des Motors nicht mehr ausreicht, um eine zuverlässige Beheizung des Fahrzeuginnenraums zu gewährleisten.

Eine zuverlässige Beheizung des Fahrzeuginnenraums ist allerdings nicht nur für das Wohlempfinden der Benutzer des Fahrzeugs wichtig, sondern ist auch von Bedeutung für die Sicherheit des Fahrbetriebs, da z.B. bei beschlagenen Front- und Seitenscheiben die Sicht des Fahrers eingeschränkt ist.

Aus den vorgenannten Gründen wurden im Stand der Technik bereits Heizkörper mit elektrischen Zusatzheizungen vorgeschlagen, die in den Luftzuführungskanal zum Fahrzeuginnenraum eingesetzt werden. Die Zusatzheizungen geben die Wärme an die in den Fahrzeuginnenraum strömende Luft ab, so dass auch in der kalten Jahreszeit oder direkt nach Start des Kraftfahrzeuges bei kaltem Motor den Benutzern in erheblich kürzerer Zeit eine angenehme Raumtemperatur zur Verfügung gestellt werden kann als ohne eine derartige Zusatzheizung.

Aus der EP 0 901 311 A2 ist beispielsweise eine elektrische Heizvorrichtung bekannt, bei der ein Heizblock mit mehreren Heizelementen vorgesehen ist. Als Heizelemente werden keramische Heizelemente mit positiven Temperaturkoeffizienten (PTC-Heizelemente) eingesetzt. Diese PTC-Heizelemente verfügen quasi über einen eingebauten Sicherheitsmechanismus, der bei einer Fehlfunktion des Heizelements zu hohe Temperaturen vermeidet. Eine zusätzliche Überwachungseinrichtung ist somit diesbezüglich nicht erforderlich.

Nachteilig bei diesen im Stand der Technik bekannt gewordenen elektrischen Zusatzheizungen ist allerdings, dass es bei kleinen Luftmassenströmen zu einer ungewollten Reduzierung der elektrischen Leistung kommt, so dass die zusätzliche Heizleistung der elektrischen Zusatzheizung geringer ist als vorgesehen. Ebenso kann eine Reduzierung der zusätzlichen Heizleistung auftreten, wenn höhere Lufteintrittstemperaturen vorliegen.

Die DE 34 47 182 A1 offenbart eine Heizung, aufweisend wenigstens eine Steuereinrichtung, welche derart gestaltet ist, dass eine Temperatur der Heizung ableitbar ist und dass mit der Steuereinrichtung die Leistung der Heizung in Abhängigkeit von der Temperatur der Heizung und einer vorbestimmten Grenztemperatur steuerbar ist.

Es ist die Aufgabe der vorliegenden Erfindung, einen verbesserten Heizkörper und ein Verfahren zur Steuerung eines Heizkörpers zur Verfügung zu stellen.

Der erfindungsgemäße Heizkörper ist Gegenstand des Anspruchs 1. Das erfindungsgemäße Verfahren ist Gegenstand des Anspruchs 21. Bevorzugte Weiterbildungen sind Gegenstand der Unteransprüche.

Der erfindungsgemäße Heizkörper ist insbesondere, aber nicht nur, für den Einsatz an einem Kraftfahrzeug geeignet. Der Heizkörper umfasst wenigstens eine Heizeinrichtung und wenigstens eine Leistungseinrichtung, welche wenigstens eine Heizeinrichtung mit Leistung beaufschlagt bzw. dazu geeignet ist, wenigstens einer Heizeinrichtung Energie zuzuführen. Weiterhin ist wenigstens eine Steuereinrichtung vorgesehen, die derart gestaltet ist, dass eine charakteristische Temperatur der Heizeinrichtung ableitbar ist. Des weiteren ist mit der Steuereinrichtung wenigstens die Leistung einer Heizeinrichtung steuerbar. Die Leistung der Heizeinrichtung ist dabei in Abhängigkeit von der abgeleiteten charakteristischen Temperatur der Heizeinrichtung und einer vorbestimmten Grenztemperatur steuerbar.

Die erfindungsgemäße Vorrichtung hat viele Vorteile.

Durch die Ableitung einer charakteristischen Temperatur der Heizeinrichtung kann zuverlässig festgestellt werden, ob die Heizeinrichtung in einem Temperaturbereich betrieben wird, der unkritisch für den Betrieb und die Sicherheit der Heizvorrichtung ist. Durch Vorgabe der Grenztemperatur kann auch bei Einsatz von konventionellen Widerstandsheizeinrichtungen die Sicherheit der Heizeinrichtung und der Heizvorrichtung bzw. des Heizkörpers insgesamt zuverlässig gewährleistet werden.

Es sei hier darauf hingewiesen, daß ein erfindungsgemäßer Heizkörper bei Verwendung in z.B. einem Kraftfahrzeug keine Verbindung zu dem Kühlwassersystem des Verbrennungsmotors oder dgl. aufweisen muss, aber vorzugsweise eine solche aufweist. Es ist auch möglich, daß die Heizeinrichtung des Heizkörpers als alleinige Heizquelle oder neben beliebigen anderen Heizquellen zur Beheizung des Fahrzeuginnenraums dient.

In einer bevorzugten Weiterbildung der Erfindung ist wenigstens eine Widerstandsheizeinrichtung als Heizeinrichtung vorgesehen. Besonders bevorzugt sind im wesentlichen alle oder auch alle Heizeinrichtungen als Widerstandsheizeinrichtungen ausgeführt.

Das kann auch Kostenvorteile bieten, da Widerstandsheizeinrichtungen kostengünstig herstellbar sind. Weiterhin weisen sie eine hohe Lebensdauer auf.

Die Heizeinrichtungen können einseitig oder zweiseitig ausgeführt sein und es ist auch möglich, dass die Widerstandsheizeinrichtungen rund ausgeführt sind.

An Form und Aufbau der Heizeinrichtungen ist bei Einsatz von Widerstandsheizeinrichtungen im Vergleich zu Heizeinrichtungen mit integrierter PTC-Heizung grundsätzlich keine Änderung notwendig.

Widerstandsheizeinrichtungen bieten auch den Vorteil einer homogenen Wärmeverteilung über der Fläche und insbesondere bieten sie eine annähernd gleiche elektrische Leistung, unabhängig von den anliegenden Randbedingungen, wie zum Beispiel Heizmedium-Massenstrom oder Temperatur des aufzuheizenden Mediums. Vorzugsweise wird Luft als Heizmedium eingesetzt.

In dem Temperaturbereich, der für die Klimatisierung interessant ist, spielt die Temperaturabhängigkeit der Leistung von Widerstandsheizelementen nur eine untergeordnete Rolle und kann im wesentlichen vernachlässigt werden, insbesondere im Vergleich zur Temperaturabhängigkeit der Leistung einer PTC-Heizeinrichtung.

Der erfindungsgemäße Heizkörper kann auch zur (Mit-) Erwärmung oder auch Vorwärmung z.B. des Kühlwassers und somit des Verbrennungsmotors eines Kraftfahrzeugs eingesetzt werden. Auch in diesem Temperaturbereich spielt die Temperaturabhängigkeit von Widerstandsheizelementen keine oder nur eine geringe Rolle für die Leistungsabgabe.

In einer bevorzugten Weiterbildung wird wenigstens eine Heizeinrichtung elektrisch angesteuert. Zur Erzeugung der Heizleistung können auch andere Wärmequellen eingesetzt werden.

In einer bevorzugten Weiterbildung der Erfindung ist mit der Steuereinrichtung die Leistung wenigstens einer Heizeinrichtung derart steuerbar, dass die charakteristische Temperatur der Heizeinrichtung die vorbestimmte Grenztemperatur nicht überschreitet.

Eine solche Ausgestaltung ist sehr vorteilhaft, da dadurch gewährleistet werden kann, dass bestimmte Sicherheitsbedingungen und insbesondere Grenztemperaturen nicht überschritten werden.

Generell ist vorgesehen, dass zum Beispiel die Leistung einer Heizeinrichtung erst dann gesteuert bzw. verringert wird, wenn die vorbestimmte Grenztemperatur überschritten wird. Bei einer speziellen Ausgestaltung ist es hingegen vorgesehen, dass die Leistung der Heizeinrichtung derart gesteuert wird, dass die vorbestimmte Grenztemperatur überhaupt nicht überschritten wird.

Erfindungsgemäß ist die Steuereinrichtung derart gestaltet, dass wenigstens zeitweise wenigstens ein Betriebsparameter der Heizeinrichtung erfassbar ist. Vorzugsweise wird wenigstens ein elektrischer Betriebsparameter erfasst.

Über die Erfassung eines Betriebsparameters der Heizeinrichtung kann der Betriebszustand der Heizeinrichtung abgeleitet werden. Möglich sind dabei zum Beispiel Temperaturmessungen an der Heizeinrichtung selbst oder in der Umgebung der Heizeinrichtung.

Erfindungsgemäß wird wenigstens ein elektrischer Betriebsparameter, wie Widerstand der Heizeinrichtung, Spannung oder Strom, mit dem die Heizeinrichtung beaufschlagt ist, erfasst wird.

Bei gegebenen Randbedingungen ist bei Bestimmung eines oder mehrerer der genannten Parameter der Betriebszustand der Heizeinrichtung eindeutig festlegbar. Beispielsweise hängt auch bei Widerstandsheizeinrichtungen der Widerstand der Heizeinrichtung von der Temperatur der Heizeinrichtung ab. Wird nun der (aktuelle) Widerstand der Heizeinrichtung bestimmt, so kann daraus die Temperatur der Heizeinrichtung abgeleitet werden, da die Charakteristik Strom - Spannung - Widerstand bekannt ist.

Deshalb ist es genauso gut möglich, dass bei Beaufschlagung mit einer konstanten Spannung durch Bestimmung des Stroms der Betriebszustand und somit auch die Betriebstemperatur der Heizeinrichtung bestimmt werden kann.

Die Bestimmung eines Betriebsparameters oder eines elektrischen Betriebsparameters der Heizeinrichtung ist sehr vorteilhaft, da damit zuverlässig auf die Temperatur der Heizeinrichtung zurückgeschlossen werden kann. In Abhängigkeit davon kann dann die Leistung der Heizeinrichtung zuverlässig gesteuert werden.

In einer bevorzugten Weiterbildung der Erfindung wird vorzugsweise wenigstens ein Betriebsparameter und besonders bevorzugt ein elektrischer Betriebsparameter im wesentlichen kontinuierlich bestimmt.

Es ist auch möglich, dass wenigstens ein oder alle Betriebsparameter periodisch ableitbar sind, so zum Beispiel mit einer vorbestimmten Frequenz. Die Frequenz, mit der die Betriebsparameter bestimmt werden, kann auch von den abgeleiteten Betriebsparametern selbst abhängen, so dass beispielsweise bei Betriebsparametern, die zu einer charakteristischen Temperatur der Heizeinrichtung gehören, die in einem (semi-) kritischen Bereich liegt, die Frequenz der Erfassung der Betriebsparameter erhöht wird, um eine ausreichende Sicherheit zu gewährleisten.

In einer bevorzugten Weiterbildung der Erfindung leitet die Steuereinrichtung aus dem wenigstens einen elektrischen Betriebsparameter die charakteristische Temperatur der Heizeinrichtung ab.

Vorzugsweise ist die Steuereinrichtung derart gestaltet, dass wenigstens die elektrischen Betriebsparameter Betriebsstrom und Betriebsspannung der Heizeinrichtung erfassbar sind, so dass aus einem oder beiden Parametern (Strom und Spannung) die charakteristische Temperatur oder auch der Betriebszustand der Heizeinrichtung abgeleitet wird.

Das ist sehr vorteilhaft. Die Bestimmung des Betriebszustandes und insbesondere die Bestimmung einer charakteristischen Temperatur der Heizeinrichtung unter Berücksichtigung von Betriebsstrom und Betriebsspannung der Heizeinrichtung ist besonders vorteilhaft, da es dadurch der Steuereinrichtung ermöglicht wird, die Heizeinrichtung in Abhängigkeit von Betriebszustand bzw. von der charakteristischen Temperatur der Heizeinrichtung genau zu steuern.

Dabei ist es möglich, dass die Steuereinrichtung die Betriebsparameter bzw. die elektrischen Betriebsparameter im wesentlichen zeitgleich oder nacheinander erfasst. Wenn mit den Betriebsparametern Betriebsstrom und Betriebsspannung auf den Betriebszustand der Heizeinrichtung rückgeschlossen wird, kann es dann erforderlich sein, dass der zeitliche Abstand der Messung von Betriebsstrom und Betriebsspannung derart bemessen ist, dass eine zuverlässige Bestimmung des Betriebszüstands möglich ist. Dies bedeutet, das der zeitliche Abstand nicht so groß sein darf, dass (im Auslegungsfall) eine deutliche Änderung des anderen Parameters aufgetreten ist.

In einer bevorzugten Weiterbildung der Erfindung steuert die Steuereinrichtung die Heizeinrichtung über ein Puls-Weiten-Modulationsverfahren (PWM) oder dergleichen. Besonders bevorzugt findet die Steuerung in Abhängigkeit von der charakteristischen Temperatur statt.

Bevorzugt ist dann, dass die Steuereinrichtung eine Ansteuerzeit des Puls-Weiten Modulationsverfahrens in Abhängigkeit von der charakteristischen Temperatur steuert, so dass es ermöglicht wird, dass bei charakteristischen Temperaturen, die nahe der vorbestimmten Grenztemperatur oder sogar oberhalb der vorbestimmten Grenztemperatur liegen, die Heizeinrichtung nur über kleine Zeitintervalle mit elektrischer Leistung beaufschlagt wird.

Der Einsatz eines Puls-Weiten Modulationsverfahrens ist besonders vorteilhaft, da durch gezielte Auswahl der Schaltzeiten die Leistung der Heizeinrichtung zuverlässig steuerbar ist.

In einer bevorzugten Weiterbildung einer oder mehrerer der zuvor beschriebenen Ausgestaltungen der Erfindung ist wenigstens eine Temperatursensoreinrichtung vorgesehen, aus deren Temperatursignal die bzw. eine charakteristische Temperatur der Heizeinrichtung ableitbar ist. Die direkte Messung einer charakteristischen Temperatur ist ebenfalls von Vorteil, da mit dem Messergebnis die Temperatur vorliegt, ohne dass (aufwändige) Berechnungen erforderlich sind.

In einer bevorzugten Weiterbildung der Erfindung ist als Temperatursensoreinrichtung wenigstens eine Bimetalltemperatureinrichtung und/oder wenigstens eine Schmelzsicherungseinrichtung vorgesehen.

Eine Bimetalleinrichtung ist besonders vorteilhaft, da bei Überschreiten der vorbestimmten Grenztemperatur der Kontakt unterbrochen wird, so dass automatisch die zugeführte elektrische Leistung der Heizeinrichtung auf z. B. null reduziert wird. Wenn die Temperatur den kritischen Bereich verlassen hat, schaltet eine Bimetalltemperatureinrichtung automatisch wieder durch, so dass die (Zusatz-) Heizung wieder zur Verfügung steht.

Der (zusätzliche) Einsatz einer Schmelzsicherungseinrichtung ist ebenfalls vorteilhaft, da damit zuverlässig der Betrieb eines Heizelements einer (Zusatz-) Heizeinrichtung oder der gesamten (Zusatz-) Heizvorrichtung unterbrochen werden kann, wenn die zulässige Temperatur der Schmelzsicherungseinrichtung überschritten wird. Deshalb kann zusätzlich neben anderen Sicherungsmaßnahmen eine Schmelzsicherungseinrichtung vorgesehen sein, die im entsprechenden Falle den Betrieb der Heizvorrichtung bzw. des Heizkörpers unterbricht. Besonders bevorzugt sind derartige Sicherungseinrichtungen in Nähe der Widerstandsheizeinrichtungen oder dergleichen angeordnet.

In einer bevorzugten Weiterbildung der Erfindung ist wenigstens eine berührungslose Temperatursensoreinrichtung vorgesehen.

In einer weiteren bevorzugten Weiterbildung einer oder mehrerer der zuvor beschriebenen Ausgestaltungen der Erfindung ist wenigstens eine Temperatursensoreinrichtung einer Gruppe von Temperatursensoreinrichtungen entnommen, die temperaturabhängige Widerstände, Thermoelemente und dergleichen mehr und Strahlungssensoren wie Thermopile-Sensoreinrichtungen und dergleichen mehr umfasst.

Der Einsatz eines Temperatursensors, einer Temperatursensleitung oder einer Temperatursensorleitung, die über eine Strecke eine oder mehrere Temperaturen erfassen kann, ist vorteilhaft, da insbesondere bei Einsatz an der Heizeinrichtung selbst eine zuverlässige Bestimmung der charakteristischen Temperatur erfolgen kann, so dass die Leistung der Heizeinrichtung besonders genau in Abhängigkeit von der vorbestimmten Grenztemperatur und der charakteristischen Temperatur der Heizeinrichtung steuerbar ist.

Werden als Temperatursensoreinrichtung eine oder mehrere Strahlungssensoreinrichtungen eingesetzt, kann beispielsweise die Oberfläche einer oder mehrerer Heizeinrichtungen insgesamt erfassbar sein oder es können Abschnitte oder Bereiche der Oberfläche nacheinander abgescannt werden. Ebenso ist es möglich, dass bestimmte bevorzugte Punkte der Oberfläche einer Heizeinrichtung durch einen oder mehrere Strahlungssensoreinrichtungen überwacht werden.

Besonders bevorzugt ist der Einsatz wenigstens einer Strahlungssensoreinrichtung, beispielsweise einer Thermopile-Sensoreinrichtung. Die Thermopile-Sensoreinrichtung kann auch Thermistoren oder thermische Sensoren enthalten, um eine Kompensation der Umgebungs- bzw. der Bauelement-Temperatur vorzunehmen.

Dann kann es möglich sein, dass bei Einsatz einer oder mehrerer Thermopile-Sensoreinrichtungen (örtliche) Temperaturspitzen auf der Oberfläche einer Heizeinrichtung erfassbar sind, so dass die Leistung der Heizeinrichtung noch besser steuerbar ist.

In einer bevorzugten Weiterbildung einer oder aller der zuvor beschriebenen Ausgestaltungen ist eine Mehrzahl oder auch Vielzahl von Heizeinrichtungen vorgesehen, wobei es bevorzugt ist, dass für im wesentlichen jede Heizeinrichtung wenigstens eine charakteristische Temperatur abgeleitet wird. Es ist aber auch möglich, dass die Bestimmung der charakteristischen Temperatur nur an einer Heizeinrichtung vorgenommen wird.

In einer bevorzugten Weiterbildung der Erfindung wird bei Einsatz mehrerer Heizeinrichtungen in Abhängigkeit von der charakteristischen Temperatur einer ersten Heizeinrichtung die Leistung weiterer Heizeinrichtungen gesteuert. Dies ist insbesondere dann von Vorteil, wenn die Temperatur der ersten Heizeinrichtung sich dem vorbestimmten Grenzwert nähert oder ihn schon überschritten hat. Dann wird durch Reduktion der Heizleistung nicht nur der ersten Heizeinrichtung, sondern auch weiterer Heizeinrichtungen die insgesamt zugeführte Heizleistung reduziert, so dass die erste Heizeinrichtung sich schneller abkühlt und z.B. einen kritischen Temperaturbereich wieder verlässt.

Besonders bevorzugt ist es deshalb, dass unabhängig von der charakteristischen Temperatur einer ersten Heizeinrichtung die Leistung wenigstens eines Teils der benachbarten Heizeinrichtungen der ersten Heizeinrichtung verringert oder abgeschaltet wird. Insbesondere die direkt benachbarten Heizeinrichtungen können auch eine Wärmezufuhr zu der ersten Heizeinrichtung bewirken, so dass eine Reduktion der Leistung oder eine Abschaltung der Leistung der benachbarten Heizeinrichtungen die (äußere) Wärmezufuhr zu der ersten Heizeinrichtung reduzieren kann, so dass sich diese schneller abkühlen kann.

Es sei hierbei darauf hingewiesen, dass unter dem Begriff "erste Heizeinrichtung" eine beliebige Heizeinrichtung zu verstehen ist. Hier wird mit dem Begriff "erste Heizeinrichtung" die Heizeinrichtung gemeint, deren charakteristische Temperatur sich einem bestimmten Wert oder dem vorbestimmen Grenztemperatur angenähert oder diese überschritten hat.

Wenn später (oder gleichzeitig auch) eine andere Heizeinrichtung einem bestimmten Temperaturwert oder die vorbestimmte Grenztemperatur erreicht oder überschreitet, so ist diese andere Heizeinrichtung dann (bzw. auch) als "erste Heizeinrichtung" anzusehen.

Insbesondere ist es auch möglich, dass bei Überschreitung der charakteristischen Temperatur einer Vielzahl der Heizeinrichtungen ein Teil oder auch alle Heizeinrichtungen abgeschaltet werden.

Weitere Vorteile und Anwendungsmöglichkeiten der vorliegenden Erfindung werden nun anhand von Ausführungsbeispielen mit Bezug auf die Zeichnungen erläutert.

Darin zeigen:
- Fig. 1: einen erfindungsgemäßen Heizkörper mit integrierter Zusatzheizung in perspektivischer Darstellung;
- Fig. 2: eine erste Ausführungsform eines Heizelements zur Anwendung in dem Ausführungsbeispiel gemäß Fig. 1;
- Fig. 3: eine zweite Ausführungsform eines Heizelements zur Anwendung in dem Ausführungsbeispiel gemäß Fig. 1;
- Fig. 4: eine dritte Ausführungsform eines Heizelements zur Anwendung in dem Ausführungsbeispiel gemäß Fig. 1;
- Fig. 5: eine vierte Ausführungsform eines Heizelements zur Verwendung in dem Ausführungsbeispiel gemäß Fig. 1; und
- Fig. 6: eine Bimetallsicherung für ein Heizelement des Heizkörpers gemäß dem Ausführungsbeispiel nach Fig. 1.

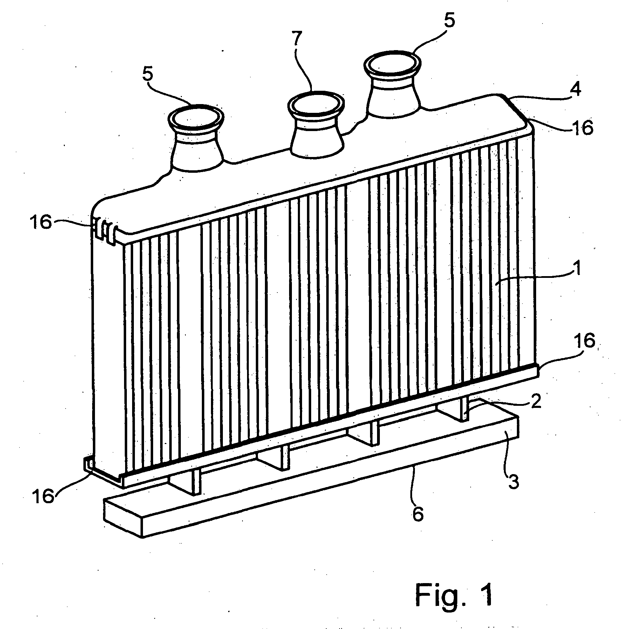

Der in Fig. 1 dargestellte Heizkörper 1 ist zur Verwendung in dem Kühlmittelkreislauf eines Verbrennungsmotors eines Kraftfahrzeugs vorgesehen.

Im Ausführungsbeispiel handelt es sich um einen Heizkörper 1, der einen linken und einen rechten Block aufweist, so dass z. B. die Fahrzeuginnenraum-Temperatur für die Fahrer- und die Beifahrerseite getrennt einstellbar ist. Es sei jedoch darauf hingewiesen, dass es nicht wesentlich ist, dass der Heizkörper 1 als Zweiblock-Heizkörper ausgelegt ist oder an den Kühlkreislauf des Motors angeschlossen ist.

Der Heizkörper 1 weist einen linken Anschlussstutzen 5 für den Zulauf des einen Blocks und einen rechten Anschlussstutzen 5 für den Zulauf des anderen Blocks auf.

Der Heizkörper 1 weist einen Wasserkasten 4 auf, in dem das Kühlmittel auf die einzelnen Rohre verteilt wird.

Ein Zuheizer bzw. eine Gruppe 2 von Widerstands-Heizelementen 8 ist vorgesehen, um als Zusatzheizung zu fungieren. Die einzelnen elektrischen Widerstands-Heizelemente 8 werden von der Leistungselektronik 3 des Heizkörpers, in der Steuerungseinrichtungen 6 vorgesehen sind, gesteuert. Die Leistungselektronik 3 überwacht dabei die Spannungen und die Stromstärken der einzelnen Heizelemente 8.

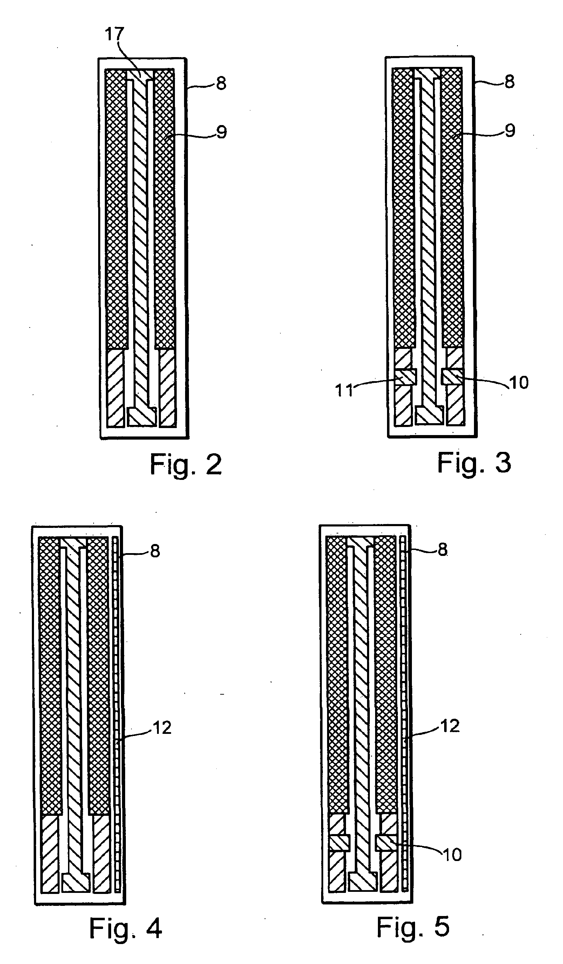

Die Heizelemente 8 im Kühlkörper sind großflächig ausgeführt. Die in den Fig. 2 bis 5 dargestellten Heizelemente sind beidseitig ausgeführt. Allerdings kann auch nur eine Seite mit einer Heizzone vorgesehen sein. Alternativ können die Widerstands-Heizelemente auch rund ausgeführt sein.

Die Leistungselektronik ist nicht unbedingt direkt am Heizkörper bzw. am Heizelement selbst vorgesehen, steht jedoch in elektrischer Verbindung damit. Im Ausführungsbeispiel erfolgt eine permanente Strom- und Spannungsmessung.

Da die Strom/Spannungs-Kennlinien der Heizelemente bekannt sind, kann über ein in einer Speichereinrichtung der Steuerungseinrichtung 6 abgelegtes Feld bzw. abgelegte Beziehung zwischen Strom und Spannung und gegebenenfalls Widerstand der aktuelle Betriebszustand des Heizelementes bestimmt werden. Insbesondere lässt sich daraus auch die aktuell vorherrschende Temperatur im Heizelement 8 ableiten, da der Widerstand von Widerstands-Heizelementen sich mit der Temperatur ändert.

Die Änderung des Widerstands eines Widerstands-Heizelements mit der Temperatur ist bei Raumklimatisierungs-Temperaturen gering. Allerdings ist die Betriebstemperatur eines Widerstands-Heizelements deutlich oberhalb der einer üblichen Klimatisierungs-Temperatur, so dass aus der anliegenden Spannung und dem daraus resultierenden Strom eines Heizelements auch auf eine charakteristische Temperatur des Heizelements zurückgeschlossen werden kann.

Aus gemessenem Strom und Spannung wird der Betriebspunkt des Heizelements 8 abgeleitet. Dazu sind Kennlinien bzw. Kennfelder in einem Speicher der Leistungselektronik 3 bzw. Steuerungseinrichtung 6 abgelegt. Durch Zugriff (gegebenenfalls über ein Interpolationsverfahren) wird der aktuelle Betriebspunkt bestimmt. Damit liegt die charakteristische Betriebstemperatur des Heizelements 8 vor. Ist die abgeleitete charakteristische Temperatur oberhalb einer Grenztemperatur bzw. nähert sich an diese an, wird die elektrische Leistung des Heizelements so weit und so lange gedrosselt, bis eine zulässige Temperatur erreicht wird.

In der Steuerungseinrichtung ist ein Regelmechanismus vorgesehen, der in Abhängigkeit von der charakteristischen Temperatur eines Heizelements 8 und der vorgegebenen maximalen Betriebstemperatur des Heizelements 8 dessen elektrische Leistung steuert.

Die Steuerung der Leistungsaufnahme der Heizelemente 8 erfolgt über ein Puls-Weiten-Modulationsverfahren, in dem den Heizelementen periodisch über eine bestimmte Zeitlänge eine Spannung angelegt wird, während er für eine weitere bestimmte Zeitfolge abgeschaltet wird. Über das Verhältnis von Spannungszufuhr zu Abschaltung kann die Heizleistung der Heizelemente 8 genau gesteuert werden.

Dies ist nicht nur für kritische Betriebszustände sinnvoll, wenn eine Überhitzung der Heizelemente verhindert werden soll, sondern auch zur Steuerung der Heizleistung insgesamt. Typischerweise weisen die Heizeinrichtungen in einem Kraftfahrzeug Werte in der Größenordnung zwischen etwa 1 und 1,5 kW Leistung auf. Bei einer Bordnetzspannung von z. B. 12 V bedeutet dies eine Stromstärke von 80 bis etwa 120 A. Bei einer Stromstärke von 80 A und z. B. 4 Schaltstufen ergeben sich dann z. B. Schaltstufen von 20 A. Hier ist eine genauere Einstellung der Stromstärke sinnvoll, um die Leistungsaufnahme an die sonstigen Gegebenheiten anzupassen.

Deshalb ist ein Puls-Weiten-Modulationsverfahren sehr vorteilhaft, da durch Anpassung der Puls-Weite die Stromstärke und somit auch die Heizleistung sehr genau dosiert werden kann.

Während beispielsweise ein modernes Dieselfahrzeug oder ein Vierzylinder-Ottomotor bei einem Kaltstart Heizleistungsdefizite aufweist, um den Innenraum des Fahrzeugs aufzuheizen, nimmt dieses Defizit bei heutigen Fahrzeugen im allgemeinen im Laufe der Betriebsdauer ab. Durch das Puls-Weiten-Modulationsverfahren kann die zusätzliche Heizleistung der Zusatzheizung exakt an die Betriebsbedingungen des Motors angepasst werden, so dass der Fahrzeuginnenraum mit passender Temperatur belüftet werden kann.

Neben der genauen Leistungsdosierung im Betrieb bietet das Puls-Weiten-Modulationsverfahren zur Ansteuerung der Heizelemente oft auch den Vorteil, dass die Heizleistung an die charakteristische Temperatur des Heizelements 8 angepasst werden kann.

Je näher sich die charakteristische Temperatur des Heizelements 8 an eine vorgegebene Maximaltemperatur annähert, desto mehr kann die Leistung des entsprechenden Heizelements reduziert werden, um eine Überhitzung zu vermeiden.

Ebenso ist es möglich, dass eine Reduzierung der Heizleistung erst dann erfolgt, wenn die Grenztemperatur erreicht oder überschritten wird. Dann ist es möglich, dass die Heizleistung direkt auf null zurückgefahren wird.

Gegebenenfalls kann in einem solchen Fall auch die Heizleistung benachbarter Heizelemente reduziert werden, um eine weitere Aufheizung des entsprechenden Heizelements 8 zu verhindern. Gegebenenfalls kann ein ganzer Bereich abgeschaltet werden, um die vorgegebenen Sicherheitsbedingungen nicht zu überschreiten.

Weiterhin kann z. B. an der Leistungselektronik eine standardisierte Schnittstelle vorliegen, um Messdaten oder dergleichen weiterzuleiten. Die Schnittstelle kann in Form einer Datenbus-Anschlussstelle oder einer seriellen Schnittstelle für einen Computer oder dergleichen ausgeführt sein.

Als Widerstands-Heizeinrichtungen 8 im Heizkörper 1 können beispielsweise die in den Fig. 2 bis 5 dargestellten Heizelemente 8 Verwendung finden.

Die einzelnen Heizelemente sind in den Figuren 2 bis 5 jeweils mit Bezugsziffer 8 versehen, da sie im Wesentlichen die gleiche Aufgabe erfüllen und grundsätzlich den gleichen Aufbau aufweisen. Unterschiedliche Teile sind jedoch mit unterschiedlichen Bezugszeichen versehen.

Das in Fig. 2 dargestellte Heizelement 8 ist als Dickschicht-Heizelement ausgeführt und weist ein Stahlsubstrat 17 auf, auf dem symmetrisch auf beiden Seiten zwei Heizzonen 9 angeordnet sind. Es ist auch möglich, dass nur auf einer Seite des Substrates 17 eine Heizzone vorgesehen ist.

Das in Fig. 3 dargestellte Heizelement 8 weist im Unterschied zu dem Heizelement 8 aus Fig. 2 zusätzlich noch Sicherungen gegenüber Überhitzen auf. Auf der einen Seite ist die Heizzone 9 durch eine Schmelzsicherung 10 abgesichert, während hier beispielsweise die Heizzone 9 auf der anderen Seite durch eine reversiblen Sicherung abgesichert ist.

Selbstverständlich können auf beiden Seiten Schmelzsicherungen und/oder auch zusätzlich dazu reversible Sicherungen vorgesehen sein. Reversible Sicherungen haben den Vorteil, dass sie bei Abkühlung des Heizelements auf zugelassene Werte automatisch oder manuell wieder auf Durchlass schalten, so dass einem Weiterbetrieb des Heizelements nichts im Wege steht.

Schmelzsicherungen hingegen bieten den Vorteil, dass ein versehentliches Wieder-Inbetriebnehmen nicht möglich ist. Deshalb ist es unter Umständen vorteilhaft, eine zusätzliche Schmelzsicherung vorzusehen, die im Notfall bei Versagen der anderen Sicherungssysteme das Heizelement 8 zuverlässig außer Betrieb setzt.

Das in Fig. 4 dargestellte Heizelement 8 weist in dieser Ausführungsform eine reversible Sicherung oder eine Schmelzsicherung auf, wie das Heizelement aus Fig. 3. Hier ist eine Sensleitung 12 vorgesehen, die die Temperatur des Heizelementes bestimmt. Es können auch mehrere Sensleitungen vorgesehen sein, die die Temperatur an verschiedenen Stellen oder in verschiedenen Arealen des Heizelementes bestimmen, so dass auch eine örtliche Auflösung der Temperaturverteilung über einem Heizelement detektierbar ist. Sensleitungen 12 im Heizelement 8 sind Sensorleitungen, die über wenigstens einen Teil ihrer Länge temperaturempfindlich sind, so dass über die Länge der Sensleitung 12 repräsentatives bzw. ein gemitteltes Temperatursignal erfassbar ist.

Durch den Einsatz mehrerer getrennter Sensleitungen können lokale Temperaturspitzen detektiert werden.

So ist es möglich, dass ein oder mehrere Thermoelemente oder Widerstands-Thermometer in einem Heizelement 8 vorgesehen sind, um die Temperatur oder die Temperaturverteilung über einem Heizelement zu detektieren.

Das in Fig. 5 dargestellte Heizelement 8 weist eine Sensleitung 12 wie das in Fig. 4 dargestellte Heizelement auf, und zusätzlich Schmelzsicherungen 10 oder auch reversible Sicherungen 11. In einem solchen Fall kann über die Sensleitung eine charakteristische Temperatur des Heizelements 8 bestimmt werden, während eine zusätzliche Schmelz- oder reversible Sicherung 10 bzw. 11 als zusätzliche Sicherung für den Ausfall der sonstigen Sicherungssysteme dient. So kann ein größerer Schaden effektiv vermieden werden.

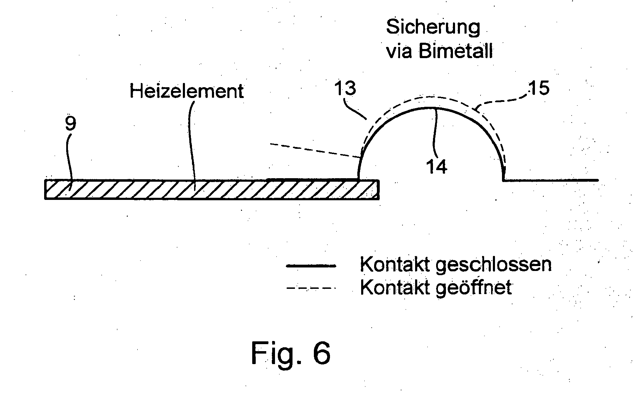

Eine reversible Sicherung für ein Heizelement ist z. B. in Fig. 6 dargestellt und ist dort als Bimetallsicherung ausgeführt. Das Bimetall ist in Reihe zu der Heizzone 9 an das Heizelement geschaltet. Im durchgezogenen Zustand 14 ist der Kontakt geschlossen, während bei Überhitzung der Bimetallsicherung die Sicherung öffnet, was gestrichelt durch den Zustand 15 dargestellt ist.

Es sei darauf hingewiesen, dass ein Heizkörper 1 mit jedem der in Fig. 2 bis 5 dargestellten Heizelemente 8 ausgerüstet sein kann. Dabei ist es möglich, dass in einem Heizkörper 1 identische oder unterschiedliche Heizelemente vorgesehen sind.

Bei dem erfindungsgemäßen Heizkörper ist die Anzahl der Einzelteile reduziert, so dass sich kleinere Einzelteilkosten ergeben. Weiterhin ist der Montageprozess nicht so aufwendig.

Bei dem erfindungsgemäßen Heizkörper ist die Leistung unabhängig vom Luftmassenstrom, und auch bei höheren Lufteintrittstemperaturen lässt die Leistung nicht nach.

Durch die eingebauten Sicherheitsmechanismen ist eine weitere Überwachungseinrichtung nicht notwendig.

Weiterhin wird durch den Einsatz von bekannten Widerstands-Heizelementen eine homogene Wärmeverteilung über den Heizelementen und den Heizkörper erzielt.

## Patentansprüche

1. Heizkörper (1) für ein Kraftfahrzeug, mit wenigstens einer Heizeinrichtung (8), wenigstens einer Leistungseinrichtung (3), welche wenigstens eine Heizeinrichtung (8) mit Leistung beaufschlagt, und mit einer Steuereinrichtung (6), welche derart gestaltet ist, dass eine charakteristische Temperatur der Heizeinrichtung (8) ableitbar ist, wobei wenigstens die elektrischen Betriebsparameter Betriebsstrom und Betriebsspannung der Heizeinridhtung (8) erfassbar sind und die Steuereinrichtung die gesteuerte Leistungsaufnahme der Heizeiritichtung (8) durch Puls-Weiten-Modulation erfolgt, derart, dass mit der Steuereinrichtung (6) die Leistung der Heizeinrichtung (8) in Abhängigkeit von der charakteristischen Temperatur der Heizeinrichtung und einer vorbestimmten Grenztemperatur steuerbar ist.

2. Heizkörper nach Anspruch 1, **dadurch gekennzeichnet, dass** die Heizeinrichtung (8) wenigstens eine Widerstandsheizeinrichtung (8) umfasst.

3. Heizkörper nach Anspruch 1 und/oder Anspruch 2, **dadurch gekennzeichnet, dass** mit der Steuereinrichtung (6) die Leistung der Heizeinrichtung (8) derart steuerbar ist, dass die charakteristische Temperatur der Heizeinrichtung (8) die vorbestimmte Grenztemperatur nicht überschreitet.

4. Heizkörper nach mindestens einem der vorhergehenden Anspruche, **dadurch gekennzeichnet, dass** die Steuereinrichtung (6) derart gestaltet ist, dass wenigstens zeitweise wenigstens ein Betriebsparameter und vorzugsweise wenigstens ein elektrischer Betriebsparameter der Heizeinrichtung (8) erfassbar ist.

5. Heizkörper nach Anspruch 4, **dadurch gekennzeichnet, dass** der wenigstens eine Betriebsparameter im wesentlich kontinuierlich oder periodisch bestimmt wird

6. Heizkörper nach mindestens einem der Ansprüche 4 und/oder 5, **dadurch gekennzeichnet, dass** die Steuereinrichtung (6) aus dem wenigstens einen Betriebsparameter die charakteristische Temperatur der Heizeinrichtung (8) ableitet.

7. Heizkörper nach mindestens einem der vorhergehenden Ansprüche, **dadurch gekennzeichnet, dass** die Steuereinrichtung (6) derart gestaltet ist, dass die elektrischen Betriebsparameter im Wesentlichen zeitgleich oder nacheinander erfassbar sind.

8. Heizkörper nach mindestens einem der vorhergehenden Ansprüche, **dadurch gekennzeichnet, dass** ein Kühlmittelwärmetauscher vorgesehen ist.

9. Heizkörper nach einem der Ansprüche bis 8, **dadurch gekennzeichnet, dass** die Steuereinrichtung (6) eine Ansteuerzeit des Puls-Weiten-Modulationsverfahrens in Abhängigkeit von der charakteristischen Temperatur steuert.

10. Heizkörper nach mindestens einem der vorhergehenden Ansprüche, **dadurch gekennzeichnet, dass** die Steuereinrichtung (6) die Heizeinrichtung (8) abschaltet, wenn die charakteristische Temperatur die Grenztemperatur erreicht.

11. Heizkörper nach mindestens einem der vorhergehenden Ansprüche, **dadurch gekennzeichnet, dass** wenigstens eine Temperatursensoreinrichtung (12). vorgesehen ist, aus deren Temperatursignal die charakteristische Temperatur ableitbar ist

12. Heizkörper nach Anspruch 11, **dadurch gekennzeichnet, dass** als Temperatursensoreinrichtung (12) eine Bimetalltemperatureinrichtung (11, 13) oder Schmelzsicherungseinrichtung (10) vorgesehen ist.

13. Heizkörper nach mindestens einem der Ansprüche 11 und 12, **dadurch gekennzeichnet, dass** wenigstens eine berührungslose Temperatursensor-Einrichtung (16) vorgesehen ist.

14. Heizkörper nach mindestens einem der Ansprüche 11 bis 13, **dadurch gekennzeichnet, dass** wenigstens eine Temperatursensoreinrichtung (12) einer Gruppe von Temperatursensoreinrichtungen entnommen ist, welche temperaturabhängige Widerstände, Thermoelemente, Sensorleitungen oder Sensleitungen (12) und dergleichen und Strahlungsensor-Sensoreinrichtungen (16) wie Thermopile-Sensoreinrichtungen (16) und dergleichen mehr umfasst.

15. Heizkörper nach mindestens einem der vorhergehenden Ansprüche, **dadurch gekennzeichnet, dass** eine Mehrzahl von Heizeinrichtungen (8) vorgesehen ist.

16. Heizkörper nach mindestens einem der Ansprüche 11 bis 15, **dadurch gekennzeichnet, dass** für im wesentlichen jede Heizeinrichtung (8) wenigstens eine charakteristische Temperatur abgeleitet wird.

17. Heizkörper nach mindestens einem der Ansprüche 11 bis 16, **dadurch gekennzeichnet, dass** in Abhängigkeit von der charakteristischen Temperatur einer ersten Heizeinrichtung (8) die Leistung weiterer Heizeinrichtungen (8) gesteuert wird.

18. Heizkörper nach mindestens einem der vorhergehenden Ansprüche, **dadurch gekennzeichnet, dass**, wenn die charakteristische Temperatur einer ersten Heizeinrichtung (8) die vorbestimmte Grenztemperatur überschreitet, die Leistung wenigstens eines Teils der benachbarten Heizeinrichtungen (8) verringert oder abgeschaltet wird.

19. Verfahren zur Steuerung eines Heizkörpers, insbesondere für ein Kraftfahrzeug, unter Verwendung eines Heizkörpers nach einem der vorhergehenden Ansprüche 1 bis 18, mit wenigstens einer Leistungseinrichtung (3), weiche wenigstens eine Heizeinrichtung (8) mit Leistung beaufschlagt, wobei die Steuereinrichtung (6) eine charakteristische Temperatur der Heizeinrichtung (8) ableitet und die Leistung der Heizeinrichtung (8) in Abhängigkeit von einer vorbestimmten Grenztemperatur steuert, **dadurch gekennzeichnet, dass** wenigstens die elektrischen Betriebsparameter Betriebsstrom und Betriebsspannung der Heizeinrichtung (8) erfasst werden.

## Claims

1. A radiator (1) for a motor vehicle, with at least one heating device (8), at least one power device (3) which applies power to at least one heating device (8), and with one control device (6) which is designed such that a characteristic temperature of the heating device (8) can be derived, wherein at least the electrical operating parameters of operating current and operating voltage of the heating device (8) can be detected and the control device performs the controlled power input of the heating device (8) via pulse-width modulation, such that the power of the heating device (8) is controllable using the control device (6) depending on the characteristic temperature of the heating device and a predetermined limit temperature.

2. The radiator according to claim 1, **characterised in that** the heating device (8) comprises at least one resistance heating device (8).

3. The radiator according to claim 1 and/or claim 2, **characterised in that** the power of the heating device (8) is controllable using the control device (6) such that the characteristic temperature of the heating device (8) does not exceed the predetermined limit temperature.

4. The radiator according to at least one of the preceding claims, **characterised in that** the control device (6) is designed such that at least one operating parameter and preferably at least one electrical operating parameter of the heating device (8) can be detected at least temporarily.

5. The radiator according to claim 4, **characterised in that** the at least one operating parameter is determined substantially continuously or periodically.

6. The radiator according to at least one of claims 4 and/or 5, **characterised in that** the control device (6) derives the characteristic temperature of the heating device (8) from the at least one operating parameter.

7. The radiator according to at least one of the preceding claims, **characterised in that** the control device (6) is designed such that the electrical operating parameters can be detected substantially at the same time or sequentially.

8. The radiator according to at least one of the preceding claims, **characterised in that** a refrigerant heat exchanger is provided.

9. The radiator according to one of claims 1 to 8, **characterised in that** the control device (6) controls a control time of the pulse-width modulation method depending on the characteristic temperature.

10. The radiator according to at least one of the preceding claims, **characterised in that** the control device (6) switches the heating device (8) off when the characteristic temperature reaches the limit temperature.

11. The radiator according to at least one of the preceding claims, **characterised in that** at least one temperature sensor device (12) is provided, wherein the characteristic temperature can be derived from the temperature signal thereof.

12. The radiator according to claim 11, **characterised in that** a bimetal temperature device (11, 13) or fuse device (10) is provided as the temperature sensor device (12).

13. The radiator according to at least one of claims 11 and 12, **characterised in that** at least one non-contact temperature sensor device (16) is provided.

14. The radiator according to at least one of claims 11 to 13, **characterised in that** at least one temperature sensor device (12) is taken from a group of temperature sensor devices which comprises temperature-dependent resistors, thermo-elements, sensor lines or sense lines (12) and the like and radiation sensor-sensor devices (16) such as thermopile sensor devices (16) and the like.

15. The radiator according to at least one of the preceding claims, **characterised in that** a plurality of heating devices (8) is provided.

16. The radiator according to at least one of claims 11 to 15, **characterised in that** at least one characteristic temperature is derived for substantially every heating device (8).

17. The radiator according to at least one of claims 11 to 16, **characterised in that** the power of further heating devices (8) is controlled depending on the characteristic temperature of a first heating device (8).

18. The radiator according to at least one of the preceding claims, **characterised in that** the power of at least a part of the adjacent heating devices (8) is reduced or switched off when the characteristic temperature of a first heating device (8) exceeds the predetermined limit temperature.

19. A method for controlling a radiator, in particular for a motor vehicle, using a radiator according to one of the preceding claims 1 to 18, with at least one power device (3) which applies power to at least one heating device (8), wherein the control device (6) derives a characteristic temperature of the heating device (8) and controls the power of the heating device (8) depending on a predetermined limit temperature, **characterised in that** at least the electrical operating parameters of operating current and operating voltage of the heating device (8) are detected.

## Revendications

1. Corps de chauffe (1) pour un véhicule automobile, comprenant au moins un dispositif de chauffage (8), au moins un dispositif de puissance (3) qui alimente en puissance au moins un dispositif de chauffage (8), et comprenant un dispositif de commande (6) qui est conçu de manière telle, qu'une température caractéristique du dispositif de chauffage (8) puisse être déduite, où au moins les paramètres de fonctionnement électriques, à savoir le courant de fonctionnement et la tension de fonctionnement du dispositif de chauffage (8), sont détectables, et le dispositif de commande permet d'obtenir la puissance absorbée du dispositif de chauffage (8), commandée par modulation d'impulsions en largeur, de manière telle que la puissance du dispositif de chauffage (8) puisse être régulée par le dispositif de commande (6) en fonction de la température caractéristique du dispositif de chauffage et d'une température limite prédéterminée.

2. Corps de chauffe selon la revendication 1, **caractérisé en ce que** le dispositif de chauffage (8) comprend au moins un dispositif de chauffage à résistance (8).

3. Corps de chauffe selon la revendication 1 et / ou la revendication 2, **caractérisé en ce que** la puissance du dispositif de chauffage (8) peut être régulée par le dispositif de commande (6), de manière telle que la température caractéristique du dispositif de chauffage (8) ne dépasse pas la température limite prédéterminée.

4. Corps de chauffe selon au moins l'une quelconque des revendications précédentes, **caractérisé en ce que** le dispositif de commande (6) est conçu de manière telle, qu'au moins un paramètre de fonctionnement et, de préférence, au moins un paramètre de fonctionnement électrique du dispositif de chauffage (8), puisse être détecté au moins par moments.

5. Corps de chauffe selon la revendication 4, **caractérisé en ce que** le paramètre de fonctionnement au moins au nombre de un est déterminé pratiquement de façon continue ou périodique.

6. Corps de chauffe selon au moins l'une des revendications 4 et / ou 5, **caractérisé en ce que** le dispositif de commande (6) déduit, du paramètre de fonctionnement au moins au nombre de un, la température caractéristique du dispositif de chauffage (8).

7. Corps de chauffe selon au moins l'une quelconque des revendications précédentes, **caractérisé en ce que** le dispositif de commande (6) est conçu de manière telle, que les paramètres de fonctionnement électriques soient détectables pratiquement en même temps ou successivement.

8. Corps de chauffe selon au moins l'une quelconque des revendications précédentes, **caractérisé en ce qu'**il est prévu un échangeur de chaleur du liquide de refroidissement.

9. Corps de chauffe selon l'une quelconque des revendications 1 à 8, **caractérisé en ce que** le dispositif de commande (6) régule un temps de pilotage du procédé de modulation d'impulsions en largeur, en fonction de la température caractéristique.

10. Corps de chauffe selon au moins l'une quelconque des revendications précédentes, **caractérisé en ce que** le dispositif de commande (6) coupe le dispositif de chauffage (8) quand la température caractéristique atteint la température limite.

11. Corps de chauffe selon au moins l'une quelconque des revendications précédentes, **caractérisé en ce qu'**il est prévu au moins un dispositif à capteurs de température (12) dont le signal de température permet de déduire la température caractéristique.

12. Corps de chauffe selon la revendication 11, **caractérisé en ce qu'**il est prévu, comme dispositif à capteurs de température (12), un dispositif de température à bilame (11, 13) ou un dispositif coupe-circuit à fusible (10).

13. Corps de chauffe selon au moins l'une des revendications 11 et 12, **caractérisé en ce qu'**il est prévu au moins un dispositif à capteurs de température (16) sans contact.

14. Corps de chauffe selon au moins l'une quelconque des revendications 11 à 13, **caractérisé en ce qu'**au moins un dispositif à capteurs de température (12) est choisi parmi un groupe de dispositifs à capteurs de température, lequel dispositif comprend des résistances variant avec la température, des thermocouples, des conduites de capteurs ou conduites de détection (12) et autres éléments similaires, et comprend en plus des dispositifs à capteurs de rayonnement (16) comme des dispositifs à capteurs de thermopiles (16) et autres dispositifs similaires.

15. Corps de chauffe selon au moins l'une quelconque des revendications précédentes, **caractérisé en ce qu'**il est prévu une pluralité de dispositifs de chauffage (8).

16. Corps de chauffe selon au moins l'une quelconque des revendications 11 à 15, **caractérisé en ce qu'**au moins une température caractéristique est déduite pour pratiquement chaque dispositif de chauffage (8).

17. Corps de chauffe selon au moins l'une quelconque des revendications 11 à 16, **caractérisé en ce que** la puissance d'autres dispositifs de chauffage (8) est régulée en fonction de la température caractéristique d'un premier dispositif de chauffage (8).

18. Corps de chauffe selon au moins l'une quelconque des revendications précédentes, **caractérisé en ce que**, quand la température caractéristique d'un premier dispositif de chauffage (8) dépasse la température limite prédéterminée, la puissance d'au moins une partie des dispositifs de chauffage adjacents (8) est réduite ou coupée.

19. Procédé de commande d'un corps de chauffe, en particulier pour un véhicule automobile, mis en oeuvre en utilisant un corps de chauffe selon l'une quelconque des revendications précédentes 1 à 18, comprenant au moins un dispositif de puissance (3) qui fournit de la puissance à au moins un dispositif de chauffage (8), où le dispositif de commande (6) déduit une température caractéristique du dispositif de chauffage (8) et régule la puissance du dispositif de chauffage (8) en fonction d'une température limite prédéterminée, **caractérisé en ce qu'**au moins les paramètres de fonctionnement électriques, à savoir le courant de fonctionnement et la tension de fonctionnement du dispositif de chauffage (8), sont détectés.
